# EUROPEAN PATENT APPLICATION

(11) **EP 4 780 004 A1**
(43) Date of publication of application: **22.07.2026**
(21) Application number: 25305053.8
(22) Date of filing: 16.01.2025
(51) Int. Cl.: H04N 21/81, G06T 9/00, H04N 21/84, H04N 21/845, H04N 21/854

(54) **AVATAR REPRESENTATION FORMAT DATA TYPES**

(71) Applicant: InterDigital CE Patent Holdings, SAS, 75017 Paris (FR)
(72) Inventor: AVRIL, Quentin, 35830 BETTON (FR); COVA REGATEIRO, João Pedro, 35220 CHATEAUBOURG (FR); GOSSELIN, Philippe Henri, 35235 THORIGNE-FOUILLARD (FR); LE CLERC, Francois, 35590 L'HERMITAGE (FR)
(74) Representative: Vossius & Partner Patentanwälte Rechtsanwälte mbB

(57) **Abstract**

Methods and apparatus are provided for adding new data types to the Avatar Representation Format data property. The type property is a string providing the mime types of the data. At least one embodiment refers to different signaling ways for the geometry objects using one or more data types. The embodiments define one single signaling way of the Mesh object and add the geometry properties as a Data property. The embodiments then switch between the different signaling ways of the geometry objects by changing the value of type in mesh data. In this case the definition of the Geometry containers is external to the ARF description.

## Description

### BACKGROUND

The domain of the invention is avatar encoding for 3D scene representations.

### SUMMARY OF THE INVENTION

At least one of the present embodiments generally relates to a method or an apparatus for representation of avatars in 3D virtual environments.

According to a first aspect, there is provided a method. The method comprises steps for including at least one data type in an avatar descriptor; and, encoding said avatar descriptor into a bitstream.

According to a second aspect, there is provided another method. The method comprises steps for parsing a bitstream comprising at least one data type in an avatar descriptor; decoding said avatar descriptor; and, reconstructing an avatar comprising using said avatar descriptor
According to another aspect, there is provided an apparatus. The apparatus comprises a processor and a memory. The processor can be configured to operate according to any of the aforementioned methods.

According to another general aspect of at least one embodiment, there is provided a device comprising an apparatus according to any of the decoding embodiments; and at least one of (i) an antenna configured to receive a signal, the signal including a video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal or bitstream comprising a 3D scene, including an avatar or video data generated according to any of the described encoding embodiments or variants.

According to another general aspect of at least one embodiment, a bitstream comprising a 3D scene, including an avatar or video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

Figure 1 is a block diagram illustrating an example system according to one or more embodiments of the present disclosure.
Figure 2 is a block diagram illustrating an example video encoder according to one or more embodiments of the present disclosure.
Figure 3 is a block diagram illustrating an example video decoder according to one or more embodiments of the present disclosure.
Figure 4 illustrates the Avatar Representation Format data types.
Figure 5 illustrates one embodiment of an encoding method under the described aspects.
Figure 6 illustrates one embodiment of a decoding method under the described aspects.
Figure 7 illustrates one embodiment of an apparatus under the described aspects.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

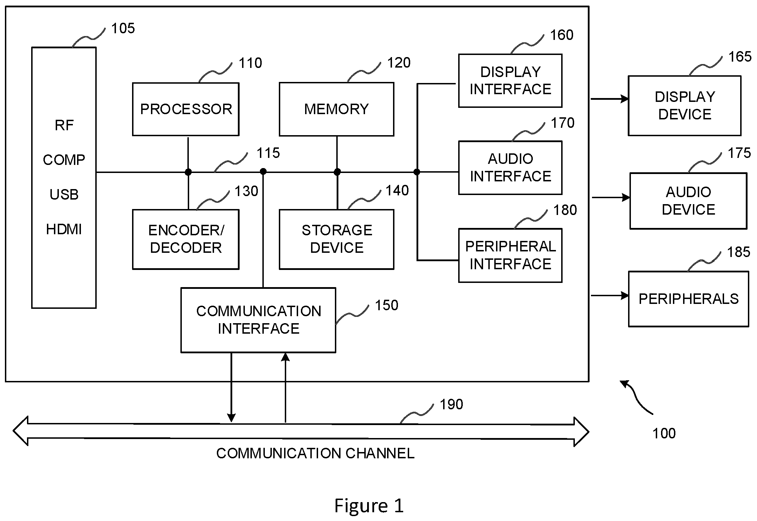

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process a 3D scene description data or video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include 3D meshes and textures thereof, 3D polylines and colors thereof, data for animating faces and bodies of avatars, camera poses, or input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

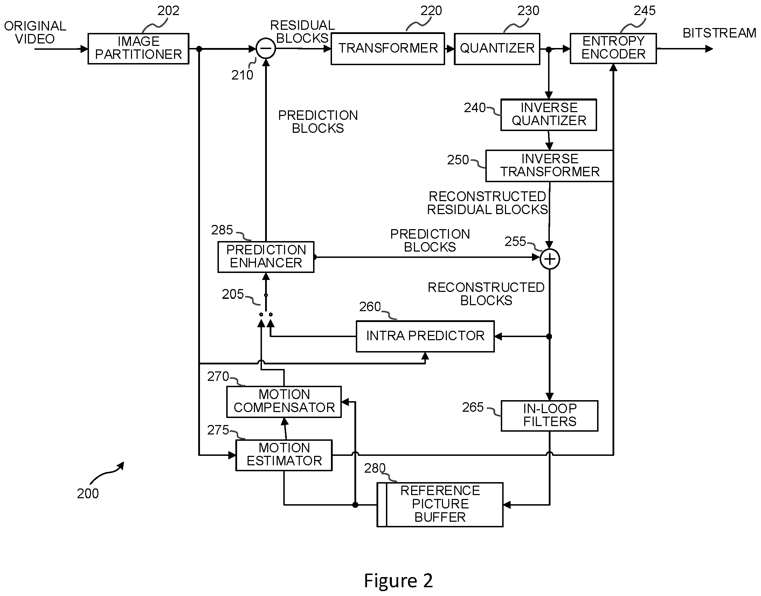

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

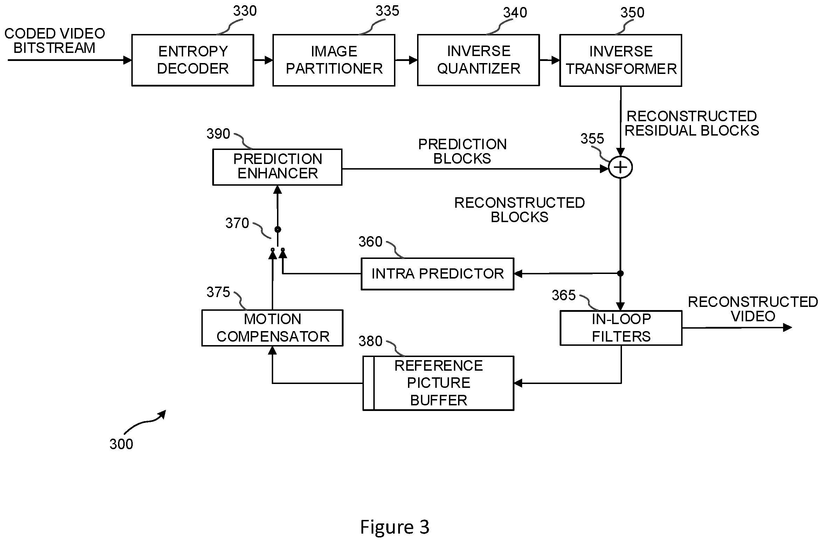

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to Figure 2. The post-decoding processor can use metadata derived by the pre-encoding processor and/or signaled in the video bitstream.

The domain of the described embodiments is the encoding of avatar components structure in the MPEG Avatar Representation Format (ARF) [1]. More precisely it proposes to define new additional data types to represent avatar components. ARF was introduced in MPEG-I Scene Description.

A novel human readable file format called AJIF that encodes an avatar instance was recently introduced. This new disclosure is based on it especially on the components defining the AJIF structure ("geometries", "nodes", "skeletons" etc.). The new proposed added types are based on these components.

In the two following sections are defined the structure of ARF and the structure of AJIF to better highlight the fundamental differences in the structure of the two formats.

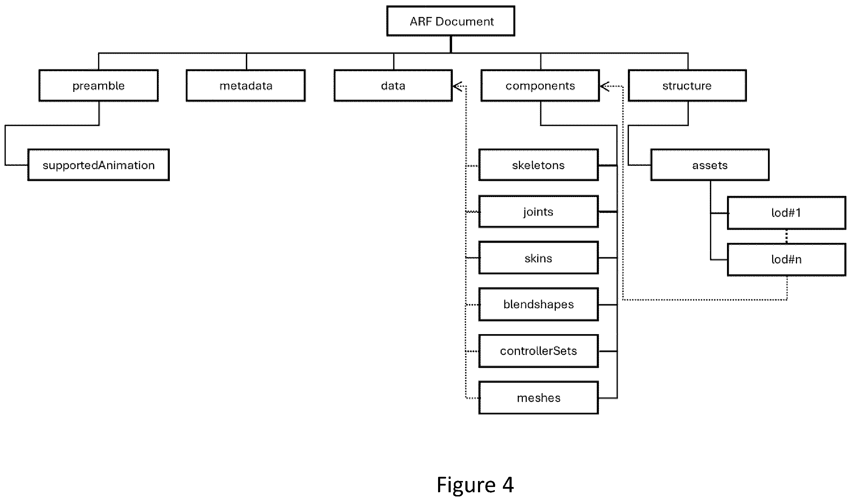

MPEG ARF is based on a set of containers regrouped into categories as illustrated in the ARF data model shown in Figure 4.

In this structure, the "meshes" one is defined as follows:

| **Name** | **Type** | **Use** | **Description** |
|---|---|---|---|
| name | string | M | The name of the mesh. |
| id | number | M | The identifier of the mesh. |
| path | string | M | A string that represents a hierarchical path that can be used to associate the mesh with a node in the external scene graph. |
| data | array(Data) | M | A reference into a data item that contains the mesh data. |

Where the properties definition is minimalist, only defining a name, an ID, a path and a pointer to the data. The *data* property contains low-level content of the ARF container (meshes, tensors, image etc.). It is defined as follows:

| **Name** | **Type** | **Use** | **Description** |
|---|---|---|---|
| name | string | M | a string that defines the name of this data. |
| type | string | M | a string that provides the mime type of the data. |
| uri | string | M | a string that defines the data content or reference to the data content depending on type. |
| offset | integer | O | defines the number of bytes used as offset into the data content as pointed to by uri. |
| byteLength | integer | O | defines the number of bytes to use in data content. |
| compression | string | O | an identifier of the compressor used to compress this LoD representation of the mesh. |
| protection | number | O | an identifier of the protection configuration that is applied to encrypt this LoD representation of the mesh. |

### AJIF structure

AJIF has the following structure

| **Name** | **Type** | **Description** | **Required** |
|---|---|---|---|
| data | RawData [1-*] | List of RawData. | No |
| geometries | Geometry [1-*] | List of Geometry. | No |
| nodes | Node [1-*] | List of Node. | No |
| textures | Texture [1-*] | List of Texture. | No |
| skeletons | Skeleton [1-*] | List of Skeleton. | No |
| controllers | Controller [1-*] | List of Controller. | No |
| lods | LOD [1-*] | List of LOD. | No |
| metadata | Metadata | Metadata about the avatar. | No |
| asset | Asset | Information about the file. | Yes |

Where all elements except the two last ones ("metadata" and "asset") are collections of items. Each collection is a list of items that can be referenced with their index in the list, where the first index is zero. Each element has then its own structure with the definition of all its properties. For example, this is the *Geometry* component (defining a mesh) with its associated properties:

| **Name** | **Type** | **Description** | **Required** |
|---|---|---|---|
| name | string | Geometry name. | No |
| vertices | integer | References an item in the "data" collection. The referenced item must be a float tensor [number of vertices, 3]. | Yes |
| normals | integer | References an item in the "data" collection. The referenced item must be a float tensor [number of vertices, 3]. | No |
| Uvs | integer [1-*] | List of references to an item the "data" collection. The ith referenced item must be a float tensor [number of uvs(i), 2]. | No |
| Faces | Faces | A Faces object. | No |
| blendshapes | Blendshape [1-*] | List of Blendshape. | No |
| textures | Texture [1-*] | List of Texture. | No |

All the other AJIF elements ("nodes", "textures", "skeletons" etc.) are defined following the same way, meaning that all properties of each element is defined in the component itself.

### Problem

In ARF, when setting a *Mesh* object, you first define its basic properties, then, if you want to complement the description of these basic properties by properties that can be grouped into a Geometry object, there are two solutions.
**Option-1:** append the properties of the *Geometry* object to the mesh. But if you want to have different ways of signaling the *Geometry* container, you must define corresponding signaling ways of the *Mesh* object, where the basic *Mesh* properties are the same in all signaling ways.
**Option-2:** the solution proposed by the described embodiments is to refer to the different signaling ways of the *Geometry* objects by as many *Data.types.* You define one single signaling way of the *Mesh* object and add the *Geometry* properties as a *Data* property (a *Data* has type and uri properties). You then switch between the different signaling ways of the *Geometry* objects by changing the value of type in *Mesh.Data.* In this case the definition of the *Geometry* containers is external to the ARF description.

### Proposed Solution

The described embodiments propose to add new data types to the ARF data property. The *type* property is a string providing the mime types of the data as illustrated in the table below.

| **Name** | **Type** | **Use** | **Description** |
|---|---|---|---|
| name | string | M | a string that defines the name of this data. |
| type | string | M | a string that provides the mime type of the data. |
| uri | string | M | a string that defines the data content or reference to the data content depending on type. |
| offset | integer | O | defines the number of bytes used as offset into the data content as pointed to by uri. |
| byte Length | integer | O | defines the number of bytes to use in data content. |
| compression | string | O | an identifier of the compressor used to compress this LoD representation of the mesh. |
| protection | number | O | an identifier of the protection configuration that is applied to encrypt this LoD representation of the mesh. |
| If type is "dense" { | | | |
| dims | integer [1-*] | M | Dimension of tensor |
| dtype | string | M | Type of values, like "f32", "f64", "i8", ... |
| } | | | |
| If type is "sparse" { | | | |
| dims | integer [1-*] | M | Dimension of tensor |
| count | integer | M | Number of a 2-tuple (index, value) in data content |
| dtype | string | M | Type of values, like "f32", "f64", "i8", ... |
| itype | string | M | Type of indices, like "i32", "i64", ... |
| } | | | |
| If type is "image" { | | | |
| mimeType | string | O | Image mime type, like "image/png" |
| dims | integer [2] | M | Image size |
| ctype | string | M | Type of colors, like "RGB", "YUV", ... |
| dtype | string | M | Type of color values, like "f32", "f64", "i8", ... |
| } | | | |
| If type is "tuples" { | | | |
| count | integer | O | Number of tuples |
| dtype | string | M | Type of tuple values, like "f32", "f64", "i8", ... |
| itype | string | M | Type of tuple sizes, like "i32", "i64", ... |
| } | | | |
| If type is "geometry" { | | | |
| name | string | O | Geometry name. |
| vertices | integer | M | References an item in the "data" collection. The referenced item must be a float tensor [number of vertices, 3]. |
| normals | integer | O | References an item in the "data" collection. The referenced item must be a float tensor [number of vertices, 3]. |
| uvs | integer [1-*] | O | List of references to an item the "data" collection. The ith referenced item must be a float tensor [number of uvs(i), 2]. |
| faces | Faces | O | A Faces object. |
| blendshapes | Blendshape [1-*] | O | List of Blendshape. In some embodiment, |
| textures | Texture [1-*] | O | List of Texture. In some embodiment, |
| ... | | | |
| These new added types correspond to the components defined in AJIF. More precisely they are "Geometry" (as seen above in the last if condition), *"Faces", "Blendshapes", "Texture", "TextureDisplacements", "Node", "Skeleton", "Skinning", "Controller", "Channel", "LOD", "Metadata" and "Asset".* | | | |

In some embodiments, data pointers can be defined in data content itself:
*1. faces* is a pointer to a Data containing the face properties
*2. blendshapes* is a pointer to a Data containing the list of blendshapes properties.
*3. textures* is a pointer to a Data containing the list of textures properties.

### Examples

Here is an example of a geometry file encoded in ARF. In the following example, the "meshes" component of the avatar has its properties *"geometry", "vertices"* and "faces" defined with these new data types (dense and geometry).

| |
|---|
| ```
 {
   "preamble": {
     "signature": "QSHD9824JF",
     "version": "1.0",
     "supportedAnimation": {
       "faceAnimation": [],
       "bodyAnimation": [],
       "handAnimation": []
     }
   },
   "metadata": {
     "name": "Morgan",
     "id": "MPEGMorgan",
     "age": 25,
     "gender": "neutral"
``` |
| ```
   },
   "structure": {
     "assets": [
       {
         "name": "main",
         "lods": [
          {
            "name": "HD",
            "skins": [],
            "meshes": [1001],
            "skeletons": [],
            "blendshapes": [],
            "controllers": []
           }
         ]
       }
     ]
   },
   "components": {
     "skeletons": [],
     "skins": [],
     "meshes": [
       {
         "name": "head",
         "id": 1001,
         "path": "",
         "data": [1]
       }
     ],
     "nodes": [],
     "blendshapes": []
   },
   "data": [
     {
       "name": "vertices",
       "type": "dense",
       "uri": "geometry_data_vertices_vertices.bin",
       "offset": θ,
       "byteLength": 144000,
       "dims": [12000, 3],
       "dtype": 10
     },
     {
       "name": "geometry",
       "type": "geometry",
       "uri": "null",
``` |
| ```
       "vertices": θ,
       "faces": {
         "vertices": 2
       }
     },
     {
       "name": "faces",
       "type": "dense",
       "uri": "geometry_data_faces_faces.bin",
       "offset": θ,
       "byteLength": 336000,
       "dims": [14000, 3],
       "dtype": 7
     }
   ]
 }
``` |

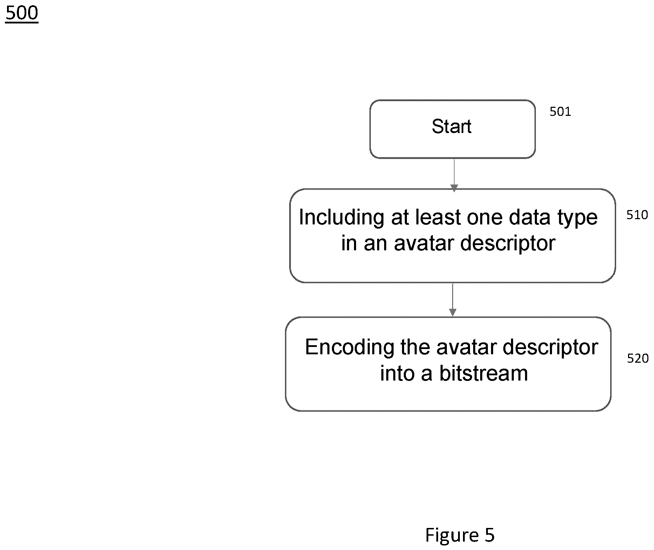

One embodiment of a method 500 under the general aspects described here is shown in Figure 5. The method commences at start block 501 and control proceeds from block 501 to block 510 for including at least one data type in an avatar descriptor. Control proceeds from block 510 to block 520 for encoding said avatar descriptor into a bitstream.

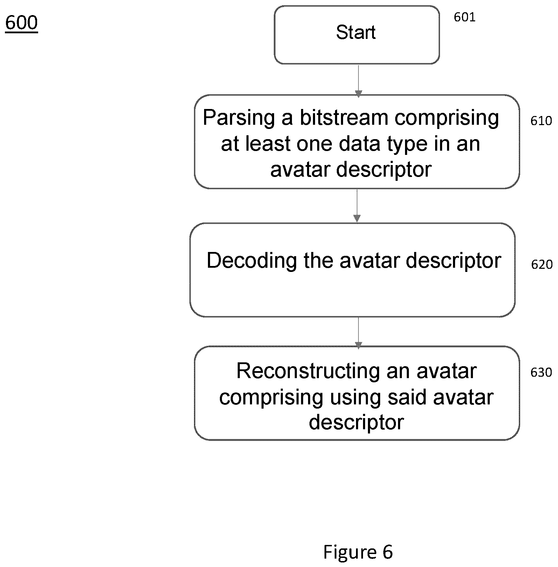

One embodiment of a method 600 under the general aspects described here is shown in Figure 6. The method commences at start block 601 and control proceeds to block 610 for parsing a bitstream comprising at least one data type in an avatar descriptor. Control proceeds from block 610 to block 620 for decoding said avatar descriptor. Control proceeds from block 620 to block 630 for reconstructing an avatar comprising using said avatar descriptor.

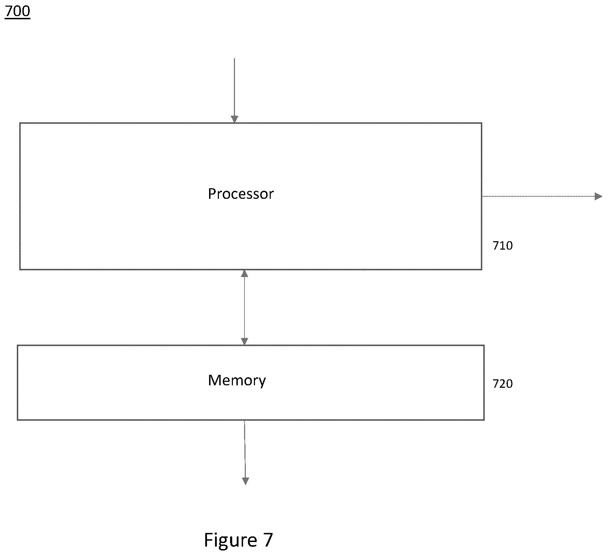

Figure 7 shows one embodiment of an apparatus 700 for encoding, decoding, compressing, or decompressing, or filtering of 3D scene description data using the aforementioned methods. The apparatus comprises Processor 710 and can be interconnected to a memory 720 through at least one port. Both Processor 710 and memory 720 can also have one or more additional interconnections to external connections.

Processor 710 is also configured to either insert or receive information in a bitstream and, either compressing, encoding, or decoding using any of the described aspects.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to Figures 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded 3D scene description data, syntax elements that can enable the decoder to decode the coded 3D scene description data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method, comprising:
including at least one data type in an avatar descriptor; and,
encoding said avatar descriptor into a bitstream.

2. An apparatus, comprising:
a memory and a processor configured to perform:
including at least one data type in an avatar descriptor; and,
encoding said avatar descriptor into a bitstream.

3. A method, comprising:
parsing a bitstream comprising at least one data type in an avatar descriptor;
decoding said avatar descriptor; and,
reconstructing an avatar comprising using said avatar descriptor.

4. An apparatus, comprising:
a memory and a processor configured to perform:
parsing a bitstream comprising at least one data type in an avatar descriptor;
decoding said avatar descriptor; and,
reconstructing an avatar comprising using said avatar descriptor.

5. The method of any one of Claims 1 or 3, or the apparatus of any one of Claims 2 or 4, wherein the avatar descriptor comprises a string providing a mime type of data.

6. The method of any one of Claims 1, 3 or 5, or the apparatus of any one of Claims 2, 4, or 5, wherein the avatar descriptor type comprises at least one of dense, sparse, image, tuples, and geometry.

7. The method of any one of Claims 1, 3,5, or 6, or the apparatus of any one of Claims 2, 4, 5, or 6, wherein the avatar descriptor comprises data pointers.

8. A device comprising:
an apparatus according to any one of claims 2, 4, 5, 6, or 7; and
at least one of (i) an antenna configured to receive a signal, the signal including a video block, (ii) a band limiter configured to limit the received signal to a band of frequencies that includes the video block, and (iii) a display configured to display an output representative of the video block.

9. A non-transitory computer readable medium containing data content generated according to the method of any one of claims 1, 3, 5, 6, or 7, or by the apparatus of any one of Claims 2, 4, 5, 6, or 7, for playback using a processor.

10. A signal comprising video data generated according to the method of any one of claims 1, 3, 5, 6, or 7, or by the apparatus of any one of Claims 2, 4, 5, 6, or 7, for playback using a processor.

11. A computer program product comprising instructions which, when the program is executed by a computer, cause the computer to carry out the method of any one of claims 1, 3, 5, 6, or 7, or by the apparatus of any one of Claims 2, 4, 5, 6, or 7.
